# EUROPEAN PATENT SPECIFICATION

(11) **EP 0 384 469 B1**
(45) Date of publication and mention of the grant of the patent: **02.08.1995**
(21) Application number: 90103468.6
(22) Date of filing: 22.02.1990
(51) Int. Cl.: B32B 27/34, B32B 27/32, B65D 23/02

(54) **Process for the production of hydrocarbon vapor-impervious container**
Verfahren zur Herstellung von Kohlenwasserstoffdampf-undurchlässiger Behälter
Procédé de fabrication de récipient imperméable à la vapeur d'hydrocarbures

(30) Priority: 23.02.1989 IT 1954689
(43) Date of publication of application: 29.08.1990
(73) Proprietor: ENICHEM S.p.A., 20124 Milano (IT)
(72) Inventor: Vezzoli, Annibale, I-22060 Carugo, Como (IT); Ciaperoni, Aldemaro, Dr., I-20021 Bollate, Milan (IT); Furlan, Piero, Dr., I-31100 Treviso (IT)
(74) Representative: Barz, Peter, Dr.

(56) References cited:
- DE-A- 2 057 709
- DE-B- 2 215 817
- DE-B- 2 820 180
- GB-A- 1 133 840

## Description

The present invention relates to a process for the production of containers which are impervious to hydrocarbon vapors and/or liquids, especially to fuels (fuel vapors).

In particular, the present invention relates to a process for the production of fuel tanks for automotive vehicles which must be impervious to vapors and/or must not exhibit transudation of the hydrocarbon liquids contained therein.

The tanks and/or containers which are impervious to hydrocarbons and/or fuels are useful in the fuel industry in general and in particular in the automotive industry.

As it is known, increasing attention is given to the problem of reducing dispersion and/or leakage, either of accidental or operative nature, of harmful materials such as hydrocarbons and the like, and in particular of fuels, in the environment, owing to the serious ecological and/or operative consequences associated therewith. In the handling of harmful materials such as hydrocarbons, the parts most exposed to possible operative dispersion, due to permeation and/or transudation phenomena, are storage tanks, in particular fuel tanks of automotive vehicles or motor vehicles in general. As regards said tanks, they are object of particular attention on the part of the manufacturing industry. In fact, said containers generally have a low thickness, for obvious economic and weight containment reasons, and therefore are particularly exposed to the above risks of permeation and/or transudation of the hydrocarbons and/or fuels contained therein. This is particularly evident in the case of fuel tanks made of plastic materials in general, and especially of high-density and high molecular weight polyethylene, which is commonly used for the manufacture of tanks for cars and motor vehicles. In fact, said tanks have a high impact strength also at low temperatures but exhibit a permeability which, although maintainable at low values, can never be considered negligible, especially in view of the regulations concerning the safety of the transported passengers.

Thus, various treatments aiming at improving the imperviousness and/or anti-transudation characteristics of the plastic materials, in particular of the high-density and high molecular weight polyethylene tanks, have been suggested and more or less satisfactory results have been obtained thereby. Said treatments are of substantially chemical nature, the most common ones of which are cross-linking, sulphonation and/or halogenation of the tank's inner surface in contact with the fuel vapors. These processes, which involve a chemical modification of the concerned surfaces, besides not completely solving the imperviousness problem, also show the drawback of being expensive and changing the mechanico-dynamic properties of the starting thermoplastic material.

Furthermore, the sulphonation is undone by the presence of water traces contained in the fuel as a consequence of hydrolysis reactions, while the halogenation requires the use of non-corrodable materials and complicated apparatus for removing the halogen vapors.

From DE-A-2057709, US-A-3,275,733 and GB-A-1,133,840 it is known how to produce hollow containers, particularly suitable for containing hydrocarbons, based on poly-omega-lactams prepared by anionic polymerization of the corresponding lactam in rotary molds. As compared with polyethylene containers, these containers offer the advantage of being completely impervious to the fuel vapors, but exhibit the drawback of having a low impact strength, especially at low temperatures, besides being disadvantageous from an economical point of view.

DE-A-2 215 817 describes containers produced by simultaneous blow molding of a polyolefin and an already formed polylactam.

It has now been found that the permeability and transudation or transpiration of the hydrocarbon vapors from the fuel containers or tanks made of plastic material, in particular of polyethylene, can be eliminated or reduced without change in the mechanico-dynamic properties and in particular the impact strength of such materials, especially at low temperatures, if at least the container or tank surface in contact with the fuel is coated with a thin layer, generally not exceeding 5 mm, of poly-omega-lactam.

Thus, it is an object of the present invention to provide a process for the production of a container comprising an outer shell of plastic material, in particular high density and high molecular weight polyethylene, at least on the inside completely coated with a thin adhering layer of poly-omega-lactam not exceeding 5mm.

The thickness of the poly-lactam coating generally ranges from 0.1 to 3 mm.

The preferred process for coating the container surface at least on the inside comprises carrying out an in situ anionic polymerization of the omega-lactam directly inside the already formed container, heated at least to the lactam polymerization temperature, while said container is subjected to rotation around two intersecting axes arranged at an angle to each other.

Said process comprises, as first step, the production of a hollow tank or container of plastic material such as, for example, high density and high molecular weight polyethylene, e.g., by conventional blow-molding or rotational casting techniques.

Into the resulting tank, heated to a temperature of at least 90°C and lower than the softening point of the plastic material, the batch to be polymerized is introduced, said batch being heated to a temperature lower by at least 5°C than the container temperature and comprising:
a) at least one omega-lactam having the general formula: 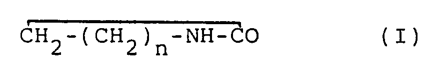 wherein n is an integer from 1 to 10;
b) a catalyst comprising a metal salt of the lactam of formula (I), the metal being selected from alkali or alkaline earth metals; and
c) a polymerisation activator (initiator).

In order to improve the impact strength characteristics of the poly-lactam layer, the polymerization batch preferably should contain small amounts, generally not higher than 15% by weight with respect to the lactam, of a polyoxyalkylene polyol having an average molecular weight higher than about 400 and preferably ranging from 2,000 to 20,000 and/or of a polyoxypropylene/polyoxyethylene polyol block or random copolymer having an average molecular weight ranging from 1,000 to 20,000, and/or of a polyoxyalkylene amine having a functionality lower than 3 and preferably ranging from 1.5 to 2.9.

The container is then caused to rotate, around two intersecting axes arranged at an angle to each other, at an angular velocity at which the centrifugal forces are smaller than the force of gravity, so that the polymerization mass remains in the lower part of the container which is continuously and homogeneously heated to a temperature ranging from 90°C to the softening point of the polymeric material forming the container, generally to a temperature lower than 150°C.

Under these conditions, the omega-lactam of formula (I) polymerizes and is deposited in successive layers on the container walls which are continuously renewed as they pass under the polymerization batch. Thereby the inner walls of the container are coated with a poly-omega-lactam layer. This is achieved by rotating the container around both rotational axes at the same angular speed, so that the entire inner surface is caused to pass under the polymerization mass at the same velocity. When a reinforcement of certain wall sections is required, this may be achieved by changing the speed of rotation around the respective axes, so that the portions to be obtained with a higher thickness are brought into contact with the polymerization mass more often than the remaining portions, thereby producing a greater number of polymer layers.

The rotational speed of the container is chosen so as to be adequate to the polymerization rate of the omega-lactam at the selected temperature, so that the inner surface of the container is completely coated before the polymerization mass has solidified into a polymer.

Heating and rotation of the container are continued for a time which is sufficient to allow a complete polymerization of the omega-lactam; generally said time ranges from 5 to 60 minutes, preferably from 10 to 30 minutes.

The omega-lactam preferably used in the present invention has the general formula: 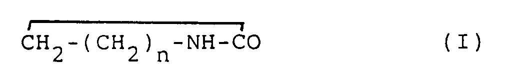
wherein n is an integer from 1 to 10.

Particularly preferred omega-lactams comprise epsilon-caprolactam, omega-enantolactam, omega-caprylolactam and omega-lauro-lactam, either individually or in combination with one another. Among these, epsilon-caprolactam is particularly preferred for reasons of economy and availability.

The catalysts which can be used for the anionic polymerization of the omega-lactams are known; they generally are used in catalytic amounts. Generally, said catalysts are lactam salts obtained by reaction of an alkali or alkaline earth metal with the omega-lactam. Preferably, sodium or potassium lactamates or bromo-magnesium lactamates, usually dissolved in the corresponding omega-lactam, are used. A solution containing 15-25% by weight of sodium or potassium lactamate in omega-lactam is preferred in the process of the present invention.

The amount of catalyst to be used can vary and usually is from 0.1 to 15 moles per 100 moles of omega-lactam, preferably from 0.5 to 10 moles and even more preferred from 1 to 7 moles per 100 moles of omega-lactam.

As activators (initiators) of the anionic polymerization of the omega-lactam of formula (I) it is possible to use all those compounds which are known and proposed for said purpose in the literature. As examples thereof the following activators can be cited: acyl lactams, carbamoyl lactams, aliphatic, arylaliphatic or cycloaliphatic polyisocyanates, optionally substituted triazines, carbodiimides, cyanamides, isocyanates and the corresponding compounds obtained from the reaction between isocyanates and lactam and, in general, all those compounds which contain electron-attracting groups so that when combined with omega-lactam and/or omega-lactamate they cause the opening of the lactam ring, thereby initiating the polymerization of the omega-lactam.

The acyl lactams described in US-A-3,862,262; 4,031,164; 4,034,015 and 4,223,112 and the N-substituted carbamoyl lactams described in US-A-4,540,516 are the preferred activators in the present invention as they have proved to be the most active ones.

The concentration of the activator can vary over a wide range, although amounts ranging from 0.01 to 10% by weight, based on the omega-lactam, and preferably ranging from 0.1 to 5% by weight, are generally utilized.

The polyoxyalkylene polyols which may be used to improve the impact strength of the poly-lactam layer, according to the present invention, are compounds well known in literature and comprise, e.g., polyoxyethylene glycol having an average molecular weight preferably ranging from 6,000 to 20,000, polyoxypropylene glycol having an average molecular weight preferably ranging from 2,000 to 10,000 and the glycols or polyols which are copolymers of ethylene oxide and propylene oxide and have an average molecular weight ranging from 1,000 to 20,000. These copolymers are available on the market for example under the tradename GLENDION® of the applicant.

As polyoxyalkylene amines it is possible to use polyoxypropylene diamines and polyoxytetramethylene diamines and, more particularly, polyoxypropylene diamines having an average molecular weight ranging from about 200 to about 2,000, such as the ones marketed under the trade name JEFFAMINE® D 2000 and JEFFAMINE® D 4000. The polxoxypropylene amines having an amine functionality of about 2.5 and an average molecular weight of about 5,000, which are known under the trade name JEFFAMINE® T 5000 are also suitable for use in the present invention. The above commercial products are sold by Texaco Chemical Company.

The polyoxyalkylene polyols, copolymers or polyoxyalkylene amines preferably are used in amounts ranging from 1% to 15%, particularly from 3% to 10% by weight, with respect to omega-lactam.

The polymerization usually is conducted under substantially anhydrous conditions. For this purpose, the container may first be purged with an inert gas such as nitrogen, to remove air and moisture. Then the polymerization mixture is introduced. The components of the polymerization mixture may be premixed before being introduced into the container, or they can be directly introduced into the cavity in any manner, such as, for example, separately or by premixing and dissolving the catalyst and/or the activator with a part of the omega-lactam.

For rotating the container during the omega-lactam polymerization, any known apparatus for rotational casting can be used, such as, for example, the devices produced by Plasmec Italia and by Caccia Italia.

The poly-omega-lactam coating on at least the surface in contact with the fuel is not limited to the tank or container made of polyethylene, but it can be applied to any polymeric material having a softening point (Vicat point) not lower than 80°C, preferably not lower than 95°C. Said polymeric materials may be homopolymers or copolymers such as, for example, acetal resins, acrylonitrile/styrene copolymers (SAN, ABS, AES), polypropylene, ethylene/propylene copolymers, polyvinyl chloride, polyester resins, poly(meth)acrylates, etc.

The containers can have any size and be intended for use with fuels in general, for which containers there is the problem of the permeation of the vapors of gasoline or any other fuel.

For a better understanding of the present invention the following illustrative example is given which, however, is not to be construed as being a limitation of the present invention.

### EXAMPLE

A 35 l-automobile tank made of high density and high molecular weight polyethylene by means of the blow-molding technique, was placed into a heating furnace of a rotational casting apparatus ("RMK 230" manufactured by Plasmec Italia) showing two rotational axes, one of which, the primary axis, rotating from above downwards (19 r.p.m.), and the other, the secondary axis, rotating on itself (27 r.p.m.); said axes formed an angle of 90°. The tank was heated for about 10 minutes until a temperature of 100-105°C was reached.

After this heating step, a mixture consisting of 1230 g of caprolactam (82.4%), 67.5 g of JEFFAMINE® D 2000 (4.6%), 120 g of 21% sodium caprolactamate in caprolactam (8%) and 75 g of hexamethylene diisocyanate in 50 g of caprolactam (as polymerization initiator) was injected into the tank; the temperature of the mixture was 95°C.

After a 15-second injection time, the tank was again placed into the furnace, where - the previously reached temperature conditions being maintained (100-105°C) - the polymerization of caprolactam was completed; time required: 6 minutes.

The tank was then cooled for about 5 minutes and taken out by the apparatus arm.
The thickness of the caprolactam layer deposited inside the tank was 1-2 mm, distributed all over the inner surface of the tank.
The lined tank was subjected to tests for measuring the permeability to the CUNA mixture.
The measurements were carried out at 40°C, after a 20-day conditioning, by means of gas-chromatography, and the permeability was expressed in g/m²/24 hours.
From the following table it is apparent that the polycaprolactam lining made the tank impervious to gasoline components.

| CUNA MIXTURE | | UNLINED TANK | LINED TANK |
|---|---|---|---|
| COMPOUND | % BY VOLUME | | |
| Methyl alcohol | 15 | 1.2 | <0.01 |
| Ethyl alcohol | 4.25 | 0.4 | <0.01 |
| Iso-octane | 25.5 | 1.5 | <0.01 |
| Di-iso-butylene | 12.75 | 0.6 | <0.01 |
| Toluene | 42.5 | 3.0 | 0.03 |

## Claims

1. Process for producing a container impervious to hydrocarbon vapors, comprising an outer shell of plastic material different from a polylactam and having a softening point not lower than 80°C coated, at least on the surface in contact with the hydrocarbon, with a layer of poly-omega-lactam which does not exceed 5 mm, which process comprises carrying out an anionic polymerization of at least one omega-lactam having the general formula: 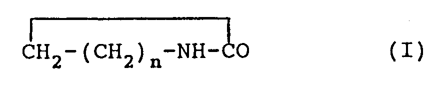 wherein n is an integer ranging from 1 to 10; in the presence of (a) a catalyst comprising a metal salt of a lactam of formula (I), said metal being selected from alkali and alkaline earth metals, and (b) a polymerisation activator, directly inside the plastic material container heated to at least the lactam polymerisation temperature and being subjected to rotation around two intersecting axes arranged at an angle to each other.

2. Process according to claim 1, wherein the container is heated, during polymerization, to a temperature of at least 90°C, which temperature is at least 5°C lower than the softening point of the plastic material forming the outer shell.

3. Process according to claim 1, wherein the catalyst is sodium lactamate, potassium lactamate and/or bromo-magnesium lactamate in an amount ranging from 0.1 to 15 moles per 100 moles of omega-lactam.

4. Process according to any one of claims 1 and 3, wherein the activator concentration ranges from 0.01 to 10% by weight with respect to the omega-lactam.

5. Process according to any one of claims 1 to 4, wherein said polymerisation activator is selected from acyl lactams, carbamoyl lactams, aliphatic, aryl-aliphatic and cycloaliphatic polyisocyanates, optionally substituted triazines, carbodiimides, cyanamides, isocyanates and the corresponding compounds obtained from the reaction between isocyanates and lactam.

6. Process according to any one of claims 1 to 5, wherein the material to be polymerized contains an amount not higher than 15% by weight with respect to the lactam of formula (I) of a polyoxyalkylene polyol having an average molecular weight higher than 400; and/or of a polyoxypropylene/polyoxyethylene polyol copolymer having an average molecular weight ranging from 1,000 to 20,000; and/or of a polyoxyalkylene amine having a functionality lower than 3.

7. Process according to any one of claims 1 to 6, wherein the omega-lactam of general formula (I) is selected from epsilon-caprolactam, omega-enantholactam, omega-caprylolactam and omega-laurolactam.

8. Process according to any one of claims 1 to 7, wherein the omega-lactam of general formula (I) is epsilon-caprolactam.

9. Process according to any one of claims 1 to 8, wherein the thickness of the layer of poly-omega-lactam ranges from 0.1 to 3 mm.

10. Process according to any one of claims 1 to 9, wherein the plastic material forming said outer shell has a softening point not lower than 95°C.

11. Process according to any one of claims 1 to 10, wherein the plastic material forming said outer shell is high density and high molecular weight polyethylene.

12. Process according to any one of claims 1 to 11, wherein during polymerization the plastic material container is caused to rotate around the two axes, at an angular velocity at which the resulting centrifugal forces are smaller than the force of gravity, for a sufficient time to result in a complete polymerization of the omega-lactam.

## Patentansprüche

1. Verfahren zur Herstellung eines Kohlenwasserdampfundurchlässigen Behälters, der eine äußere Schale aus einem von einem Polylactam verschiedenen Kunststoff-Material mit einem Erweichungspunkt von nicht niedriger als 80°C, die auf mindestens der Oberfläche, die in Kontakt mit dem Kohlenwasserstoff steht, mit einer Schicht aus Poly-omega-lactam, die 5 mm nicht überschreitet, beschichtet ist, umfaßt, wobei das Verfahren umfaßt die Durchführung einer anionischen Polymerisation mindestens eines omega-Lactams mit der allgemeinen Formel: 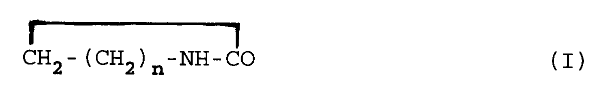 worin n eine ganze Zahl im Bereich von 1 bis 10 ist; in Anwesenheit (a) eines Katalysators, der ein Metallsalz eines Lactams der Formel (I) umfaßt, wobei das Metall aus Alkali- und Erdalkalimetallen ausgewählt ist, und (b) eines Polymerisationsaktivators, direkt im Inneren des Behälters aus Kunststoff-Material, der auf mindestens die Lactam-Polymerisationstemperatur erwärmt ist und um zwei sich schneidende Achsen, die in einem Winkel zueinander angeordnet sind, gedreht wird.

2. Verfahren nach Anspruch 1, in welchem der Behälter während der Polymerisation auf eine Temperatur von mindestens 90°C erwärmt wird, wobei die Temperatur mindestens 5°C niedriger ist als der Erweichungspunkt des die äußere Schale bildenden Kunststoff-Materials.

3. Verfahren nach Anspruch 1, in welchem der Katalysator Natriumlactamat, Kaliumlactamat und/oder Brommagnesiumlactamat in einer Menge im Bereich von 0,1 bis 15 Mol pro 100 Mol omega-Lactam ist.

4. Verfahren nach irgendeinem der Ansprüche 1 und 3, in welchem die Aktivator-Konzentration im Bereich von 0,01 bis 10 Gewichts-% bezogen auf das omega-Lactam liegt.

5. Verfahren nach irgendeinem der Ansprüche 1 bis 4, in welchem der Polymerisationsaktivator aus Acyllactamen, Carbamoyllactamen, aliphatischen, aryl-aliphatischen und cycloaliphatischen Polyisocyanaten, gegebenenfalls substituierten Triazinen, Carbodiimiden, Cyanamiden, Isocyanaten und den entsprechenden aus der Reaktion zwischen Isocyanaten und Lactam erhältlichen Verbindungen ausgewählt wird.

6. Verfahren nach irgendeinem der Ansprüche 1 bis 5, in welchem das zu polymerisierende Material eine Menge, die nicht höher als 15 Gewichts-% bezogen auf das Lactam der Formel (I) ist, eines Polyoxyalkylen-Polyols mit einem durchschnittlichen Molekulargewicht von größer 400; und/oder ein Polyoxypropylen/Polyoxyethylen-Polyol-Copolymer mit einem durchschnittlichen Molekulargewicht im Bereich von 1000 bis 20000; und/oder ein Polyoxyalkylenamid mit einer Funktionalität kleiner 3 enthält.

7. Verfahren nach irgendeinem der Ansprüche 1 bis 6, in welchem das omega-Lactam der allgemeinen Formel (I) aus epsilon-Caprolactam, omega-Enantholactam, omega-Caprylolactam und omega-Laurolactam ausgewählt wird.

8. Verfahren nach irgendeinem der Ansprüche 1 bis 7, in welchem das omega-Lactam der allgemeinen Formel (I) epsilon-Caprolactam ist.

9. Verfahren nach irgendeinem der Ansprüche 1 bis 8, in welchem die Dicke der Schicht aus Poly-omega-lactam im Bereich von 0,1 bis 3 mm liegt.

10. Verfahren nach irgendeinem der Ansprüche 1 bis 9, in welchem das die äußere Schale bildende Kunststoff-Material einen Erweichungspunkt nicht unter 95°C aufweist.

11. Verfahren nach irgendeinem der Ansprüche 1 bis 10, in welchem das die äußere Schale bildende Kunststoff-Material Polyethylen mit hohem Molekulargewicht und hoher Dichte ist.

12. Verfahren nach irgendeinem der Ansprüche 1 bis 11, in welchem während der Polymerisation der Behälter aus Kunststoff-Material veranlaßt wird, sich für eine Zeit, die für eine vollständige Polymerisation des omega-Lactams ausreichend ist, mit einer Winkelgeschwindigkeit um die zwei Achsen zu drehen, bei der die resultierenden Zentrifugalkräfte kleiner als die Schwerkraft sind.

## Revendications

1. Procédé de fabrication d'un récipient imperméable aux vapeurs d'hydrocarbures, constitué d'une coque externe en une matière plastique qui n'est pas un polylactame et présente un point de ramollissement d'au moins 80°C, revêtue, au moins sur sa surface de contact avec un hydrocarbure, d'une couche de poly-ω-lactame dont l'épaisseur ne vaut pas plus de 5 mm, lequel procédé comporte le fait de faire polymériser, par voie anionique, au moins un ω-lactame de formule générale 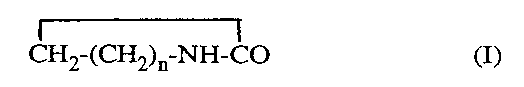 dans laquelle n représente un nombre entier valant de 1 à 10,
en présence de (a) un catalyseur comprenant un sel de métal d'un lactame de formule (I), ledit métal étant choisi parmi les métaux alcalins et les métaux alcalino-terreux, et (b) un promoteur de polymérisation, directement à l'intérieur du récipient de matière plastique que l'on chauffe au moins à la température de polymérisation du lactame et que l'on fait tourner autour de deux axes qui se coupent en formant un certain angle.

2. Procédé conforme à la revendication 1, dans lequel on chauffe le récipient, pendant la polymérisation, à une température qui vaut au moins 90°C et qui est inférieure d'au moins 5°C au point de ramollissement de la matière plastique dont est constituée la coque externe.

3. Procédé conforme à la revendication 1, dans lequel le catalyseur est un lactamate de sodium, un lactamate de potassium et/ou un lactamate de bromo-magnésium, présent en une quantité de 0,1 à 15 moles pour 100 moles d'ω-lactame.

4. Procédé conforme à l'une des revendications 1 et 3, dans lequel la concentration de promoteur vaut de 0,01 à 10 % en poids, par rapport à l'ω-lactame.

5. Procédé conforme à l'une des revendications 1 à 4, dans lequel ledit promoteur de polymérisation est choisi parmi les acyllactames, les carbamyl-lactames, les polyisocyanates aliphatiques, aryl-aliphatiques et cycloaliphatiques, les triazines substituées au choix, les carbodiimides, les cyanamides, les isocyanates et les composés correspondants, obtenus par réaction entre un isocyanate et un lactame.

6. Procédé conforme à l'une des revendications 1 à 5, dans lequel la matière qu'on fait polymériser contient une certaine quantité, qui ne vaut pas plus de 15 % en poids par rapport au lactame de formule (I), d'un polyoxyalkylène-polyol dont la masse moléculaire moyenne vaut plus de 400, et/ou d'un copolymère polyoxypropylène/polyoxyéthylène-polyol dont la masse moléculaire moyenne vaut de 1000 à 20000, et/ou d'une polyoxyalkylène-amine dont le nombre de fonctions est inférieur à 3.

7. Procédé conforme à l'une des revendications 1 à 6, dans lequel l'ω-lactame de formule générale (I) est choisi parmi l'ε-caprolactame, l'ω-oenantholactame, l'ω-caprylolactame et l'ω-laurolactame.

8. Procédé conforme à l'une des revendications 1 à 7, dans lequel l'ω-lactame de formule générale (I) est de l'ε-caprolactame.

9. Procédé conforme à l'une des revendications 1 à 8, dans lequel l'épaisseur de la couche de poly-ω-lactame vaut de 0,1 à 3 mm.

10. Procédé conforme à l'une des revendications 1 à 9, dans lequel le point de ramollissement de la matière plastique dont est constituée la coque externe vaut au moins 95°C.

11. Procédé conforme à l'une des revendications 1 à 10, dans lequel la matière plastique dont est constituée la coque externe est un polyéthylène à haute densité et à masse moléculaire élevée.

12. Procédé conforme à l'une des revendications 1 à 11, dans lequel, au cours de la polymérisation, on fait tourner le récipient de matière plastique autour des deux axes, à une vitesse angulaire telle que les forces centrifuges résultantes sont plus petites que la force de la pesanteur, pendant assez longtemps pour que s'achève la polymérisation de l'ω-lactame.
